# EUROPEAN PATENT APPLICATION

(11) **EP 4 848 559 A1**
(43) Date of publication of application: **02.12.2026**
(21) Application number: 24920328.2
(22) Date of filing: 25.01.2024
(51) Int. Cl.: H02M 7/48

(54) **POWER CONVERSION DEVICE AND AIR CONDITIONER**

(71) Applicant: Bosch Home Comfort Japan, Inc., Tokyo 105-0022 (JP)
(72) Inventor: EBATA, Yuki, Tokyo 105-0022 (JP); TSUKII, Koji, Tokyo 105-0022 (JP)
(74) Representative: MERH-IP Matias Erny Reichl Hoffmann Patentanwälte PartG mbB
(86) International application number: PCT/JP2024/002176
(87) International publication number: WO 2025/158606

(57) **Abstract**

The present invention provides a highly reliable power conversion device, etc. A power conversion device (100) includes a converter circuit (10), a smoothing capacitor (30), an inverter circuit (60), an inverter control circuit (81), an overvoltage protection circuit (50), and an overvoltage protection control circuit (82), wherein: the inverter control circuit (81) performs motor deceleration control to reduce the rotational speed of a motor (M1) when there is a command to stop a switching operation of the inverter circuit (60) and the induced voltage of the motor (M1) is higher than the DC voltage of the smoothing capacitor (30); and the overvoltage protection control circuit (82) starts overvoltage protection control to turn on a switching element (51) of the overvoltage protection circuit (50) after starting the motor deceleration control and before, during, or after stopping the switching operation of the inverter circuit (60).

## Description

### TECHNICAL FIELD

The present disclosure relates to a power conversion device and the like.

### BACKGROUND ART

Regarding power conversion devices including inverter circuits, the technique described in Patent Literature 1 is known for example. Specifically, Patent Literature 1 describes a power conversion device including an overvoltage protection circuit which has a resistor and a semiconductor element connected in series, and which is configured to protect an inverter circuit from an overvoltage.

### CITATION LIST

### Patent Literature

Patent Literature 1: JP6844725

### SUMMARY OF INVENTION

### Technical Problem

For example, in a case where a switching operation of an inverter circuit is stopped while a motor is rotating at high speed, there is a possibility that an induced voltage of the motor becomes higher than a DC voltage and causes an excessive regenerative current to flow into the overvoltage protection circuit. This results in a risk that the amount of heat generated by a resistive element of the overvoltage protection circuit will increase, shortening the lifespan of the resistive element and thermally affecting surrounding circuit components. For this reason, the technique described in Patent Literature 1 has room for improvement in terms of improving the reliability of power conversion devices.

In view of this, an object of the present disclosure is to provide a highly reliable power conversion device and the like.

### Solution to Problem

In order to achieve the above object, a power conversion device according to the present disclosure includes: a converter circuit configured to convert an AC voltage applied from an AC power supply into a DC voltage; a smoothing capacitor connected to a pair of DC lines on an output side of the converter circuit and configured to smooth the DC voltage on the output side of the converter circuit; an inverter circuit configured to convert the DC voltage of the smoothing capacitor into an AC voltage and apply the AC voltage to a motor; an inverter control unit configured to control the inverter circuit; an overvoltage protection circuit having a switching element and connected to the pair of DC lines; and an overvoltage protection control unit configured to control the overvoltage protection circuit. When a command to stop a switching operation of the inverter circuit is issued and an induced voltage of the motor is higher than the DC voltage of the smoothing capacitor, the inverter control unit preforms motor deceleration control of decreasing a rotational speed of the motor. After the motor deceleration control is started, the overvoltage protection control unit starts overvoltage protection control of turning on the switching element of the overvoltage protection circuit before, when, or after the switching operation of the inverter circuit is stopped.

### Advantageous Effects of Invention

According to the present disclosure, it is possible to provide a highly reliable power conversion device and the like.

### BRIEF DESCRIPTION OF DRAWINGS

FIG. 1 is a configuration diagram of a power conversion device according to a first embodiment.
FIG. 2 is a flowchart showing processing of a control unit of the power conversion device according to the first embodiment.
FIG. 3 includes time charts related to motor deceleration control and overvoltage protection control in the power conversion device according to the first embodiment.
FIG. 4 is a flowchart showing processing of a control unit of a power conversion device according to a second embodiment.
FIG. 5 includes time charts related to motor deceleration control and overvoltage protection control in the power conversion device according to the second embodiment.
FIG. 6 is a flowchart showing processing of a control unit of a power conversion device according to a third embodiment.
FIG. 7 includes time charts related to motor deceleration control and overvoltage protection control in the power conversion device according to the third embodiment.
FIG. 8 is a configuration diagram of a power conversion device according to a fourth embodiment.
FIG. 9 is a configuration diagram of a power conversion device according to a fifth embodiment.
FIG. 10 is a configuration diagram of a power conversion device according to a sixth embodiment.
FIG. 11 is a configuration diagram of an air conditioner according to a seventh embodiment.
FIG. 12 includes time charts related to a power conversion device according to a comparative example.

### DESCRIPTION OF EMBODIMENTS

### <<First Embodiment>>

### <Configuration of Power conversion device>

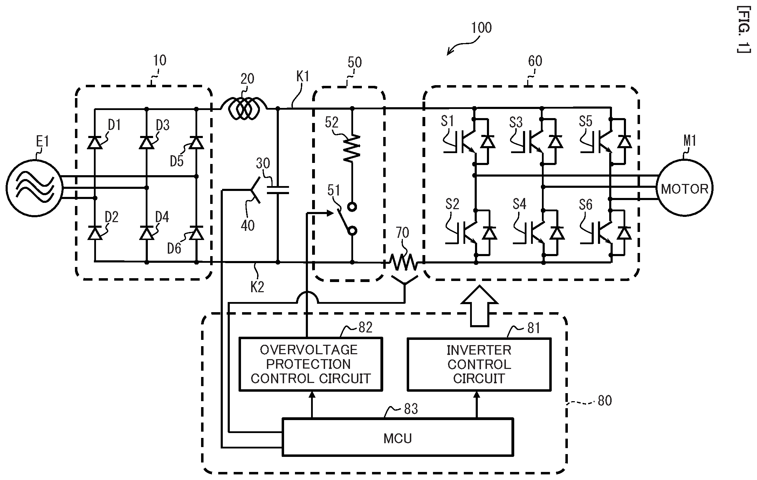

FIG. 1 is a configuration diagram of a power conversion device 100 according to a first embodiment.

The power conversion device 100 shown in FIG. 1 is a device configured to convert AC power supplied from an AC power supply E1 into DC power, convert this DC power to predetermined AC power, and output the predetermined AC power to a motor M1. The motor M1 may be, for example, a permanent magnet synchronous motor or any other type of motor. As shown in FIG. 1, the power conversion device 100 includes a converter circuit 10, a reactor 20, a smoothing capacitor 30, a DC voltage detection unit 40, an overvoltage protection circuit 50, an inverter circuit 60, a shunt resistor 70, and a control unit 80.

The converter circuit 10 is a power converter configured to convert a three-phase AC voltage applied from the AC power supply E1 into a DC voltage (pulsating DC voltage). In the example in FIG. 1, a full-wave rectifier circuit including six diodes D1 to D6 connected in a bridge form is used as the converter circuit 10. In place of the converter circuit 10 shown in FIG. 1, a switching type converter circuit may be used. An output side of the converter circuit 10 is connected to the inverter circuit 60 via a positive DC line K1 and also via a negative DC line K2.

The reactor 20 and the smoothing capacitor 30 are elements that smooth the pulsating DC voltage applied from the converter circuit 10. As shown in FIG. 1, the reactor 20 is provided on the positive DC line K1. More specifically, the reactor 20 is provided on the positive DC line K1 between the converter circuit 10 and a connection point of the DC line K1 with the smoothing capacitor 30.

As described above, the smoothing capacitor 30 is the element that smooths the DC voltage (pulsating DC voltage) on the output side of the converter circuit 10. As shown in FIG. 1, the smoothing capacitor 30 is connected to the pair of DC lines K1 and K2 on the output side of the converter circuit 10. Specifically, the smoothing capacitor 30 has one terminal (one lead wire) connected to the positive DC line K1, and the other terminal (the other lead wire) connected to the negative DC line K2. For example, a film capacitor is used as such smoothing capacitor 30.

Generally, the film capacitor is smaller in size (volume) than a large-capacity electrolytic capacitor. Therefore, use of a film capacitor as the smoothing capacitor 30 makes it possible to use a small-sized circuit board (not shown) for the power conversion device 100. Moreover, the film capacitor also has a characteristic of having a longer lifespan than that of an electrolytic capacitor. In addition, the film capacitor uses an insulating plastic film as a dielectric, and does not particularly need to use an electrolyte as in the electrolytic capacitor. Therefore, even when the power conversion device 100 is used in a high-temperature environment, the film capacitor has almost no risk of a malfunction.

In a case where a small-capacity film capacitor is used with the cost per unit capacitance taken into account, the voltage of the film capacitor tends to fluctuate in response to changes in the amount of stored electricity. For example, if the regenerative current of the motor M1 directly flows into the smoothing capacitor 30 immediately after the switching operation of the inverter circuit 60 is stopped, the DC voltage of the smoothing capacitor 30 will rise sharply. To avoid this, the overvoltage protection circuit 50 is provided to suppress the rise in the DC voltage of the smoothing capacitor 30. Here, the type of the smoothing capacitor 30 is not limited to a film capacitor, and any other type of capacitor such as an electrolytic capacitor may also be used.

The DC voltage detection unit 40 detects the DC voltage across the smoothing capacitor 30. Specifically, the DC voltage detection unit 40 detects the DC voltage between the pair of DC lines K1 and K2. For example, the DC voltage across the smoothing capacitor 30 may be divided by a series connection of multiple resistive elements (not shown), and the DC voltage detection unit 40 may detect the DC voltage of the smoothing capacitor 30 based on the voltage division ratio or the voltage of a predetermined resistive element. A detection value obtained moment by moment by the DC voltage detection unit 40 is outputted to a micro controller unit (MCU) 83.

The overvoltage protection circuit 50 is a circuit for protecting the smoothing capacitor 30 from an overvoltage and is connected to the pair of DC lines K1 and K2. As shown in FIG. 1, the overvoltage protection circuit 50 has a series connection of a switching element 51 and a resistive element 52. This series connection has one terminal connected to the positive DC line K1 and the other terminal connected to the negative DC line K2. The aforementioned series connection is connected in parallel to the smoothing capacitor 30.

The switching element 51 has a function of switching whether to allow or interrupt a current flow through the resistive element 52. As the switching element 51, for example, an insulated gate bipolar transistor (IGBT) or a metal-oxide-semiconductor field-effect transistor (MOSFET) is used. The resistive element 52 is an element that consumes electrical energy generated with the regenerative current of the motor M1 and the like and convert the electrical energy into thermal energy.

The inverter circuit 60 is a power converter configured to convert the DC voltage of the smoothing capacitor 30 into the predetermined AC voltage and apply this AC voltage to the motor M1. The inverter circuit 60 has a first leg, a second leg, and a third leg, and each of these legs is connected in parallel to the smoothing capacitor 30. The first leg includes a pair of switching elements S1 and S2 connected in series (the same applies to the remaining second and third legs). For example, IGBTs and MOSFETs can be used as the switching elements S1 to S6 serving as constitute elements of the first, second, and third legs.

In the inverter circuit 60, a connection point between the switching element S1 on the upper arm and the switching element S2 on the lower arm in the first leg is connected via wiring to a U-phase winding (not shown) of the motor M1. Similarly, a connection point between the switching element S3 on the upper arm and the switching element S4 on the lower arm in the second leg is connected via wiring to a V-phase winding (not shown) of the motor M1. A connection point between the switching element S5 on the upper arm and the switching element S6 on the lower arm in the third leg is connected via wiring to a W-phase winding (not shown) of the motor M1.

In addition, in order to prevent the switching elements S1 to S6 from being destroyed by commutation, a freewheeling diode (its reference sign is not shown in FIG. 1) is connected in antiparallel to each of the switching elements S1 to S6. In the case where the switching elements S1 to S6 have parasitic diodes, these parasitic diodes function as freewheeling diodes, so that freewheeling diodes do not particularly need to be provided additionally.

The shunt resistor 70 is a resistive element for detecting the current flowing through the DC line K2. In the example in FIG. 1, the shunt resistor 70 is provided on the negative DC line K2 between the overvoltage protection circuit 50 and the inverter circuit 60.

The control unit 80 includes an inverter control circuit 81, an overvoltage protection control circuit 82, and the micro controller unit (MCU) 83. The inverter control circuit 81 switches each of the switching elements S1 to S6 on and off in a predetermined manner based on pulse width modulation (PWM) control. With this switching, the DC voltage of the smoothing capacitor 30 is converted into the three-phase AC voltage. This AC voltage is applied to the U-phase, V-phase, and W-phase windings of the motor M1. A predetermined gate drive circuit is used as such inverter control circuit 81.

The overvoltage protection control circuit 82 controls the overvoltage protection circuit 50 in a predetermined manner. As such overvoltage protection control circuit 82, an analog electronic circuit including a comparator (not shown) may be used or a digital electronic circuit based on predetermined software may be used.

Although not shown in FIG. 1, the MCU 83 includes electronic circuits such as a central processing unit (CPU), a read only memory (ROM), a random access memory (RAM), and various interfaces. Then, the MCU 83 is configured to read a program stored in the ROM, load the program into the RAM, and cause the CPU to execute various processes.

The MCU 83 calculates a three-phase voltage command for driving the motor M1 based on the detected value of the shunt resistor 70 and so on. Based on this three-phase voltage command, the inverter control circuit 81 generates a PWM signal, and switches the switching elements S1 to S6 in the inverter circuit 60 on and off in the predetermined manner. Here, an "inverter control unit" configured to control the inverter circuit 60 includes the inverter control circuit 81 and the MCU 83.

The MCU 83 also has a function of generating a command signal to instruct whether or not to activate the overvoltage protection circuit 50 based on the detected value of the DC voltage detection unit 40. The overvoltage protection circuit 50 performs on-off control of the switching element 51 based on the command signal generated by the MCU 83. Here, an "overvoltage protection control unit" configured to control the overvoltage protection circuit 50 includes the overvoltage protection control circuit 82 and the MCU 83.

### <DC Voltage Control>

For example, immediately after the inverter circuit 60 is stopped, the rotor in the motor M1 rotates for a while by inertia (momentum), and therefore the motor M1 functions as a power generator. This results in not only generation of a regenerative current due to an induced voltage of the motor M1, but also generation of a certain current due to the energy stored in the three-phase windings of the motor M1 and the reactor 20.

The induced voltage of the motor M1 is calculated as the product (ω·Ke) of a rotational speed ω of the motor M1 and an induced voltage constant Ke. Since the aforementioned induced voltage constant Ke is a fixed value (known value), the induced voltage is proportional to the rotational speed of the motor M1. Therefore, the higher the rotational speed of the motor M1 at the moment of stopping of the inverter circuit 60, the higher the induced voltage.

In the case where the induced voltage of the motor M1 is higher than the DC voltage of the smoothing capacitor 30, a regenerative current is generated due to the potential difference, and flows from the motor M1 through the inverter circuit 60 to the smoothing capacitor 30 and so on. As described above, as the rotational speed of the motor M1 at the moment of stopping of the inverter circuit 60 becomes higher, the induced voltage becomes higher and accordingly the potential difference between the DC voltage of the smoothing capacitor 30 and the induced voltage also becomes larger, which makes it easier for a large regenerative current to flow. To avoid this, the overvoltage protection circuit 50 is provided to suppress the rise in the DC voltage of the smoothing capacitor 30 due to the regenerative current of the motor M1.

However, if the switching operation of the inverter circuit 60 is stopped while the motor M1 is rotating at high speed, an excessive regenerative current may flow into the resistive element 41 of the overvoltage protection circuit 50, and generate considerable heat in the resistive element 52. As a result, the lifespan of the resistive element 52 may be shortened and the surrounding circuit components may be thermally affected. In sum, if the inverter circuit 60 is stopped while the motor M1 is rotating at high speed, an excessive regenerative current may be generated due to the condition of "DC voltage < induced voltage", so that large electrical and thermal loads may be imposed on the overvoltage protection circuit 50.

For this reason, in the first embodiment, in the case where the condition of "DC voltage < induced voltage" is established at the moment of input of the command to stop the inverter circuit 60, the control unit 80 first decelerates the motor M1, then stops the inverter circuit 60, and thereafter switches the overvoltage protection circuit 50 on. This makes it possible to inhibit an excessive regenerative current from flowing into the overvoltage protection circuit 50, and consequently suppress the shortening of the lifespan of the resistive element 52 and so on.

### <Processing in Control Unit>

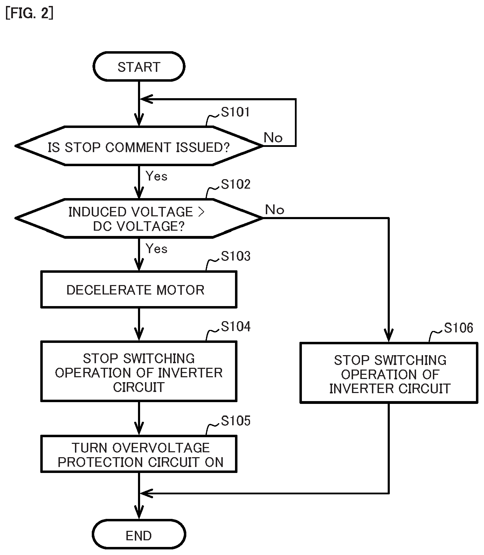

FIG. 2 is a flowchart showing processing of the control unit of the power conversion device (also see FIG. 1 as needed).

Here, it is assumed that, at "START" in FIG. 2, the motor M1 is being driven with the switching operation of the inverter circuit 60.

In step S101, the control unit 80 determines whether or not a command to stop the switching operation of the inverter circuit 60 is inputted to the MCU 83. For example, in the case where the motor M1 is used as a driving source for a compressor in an air conditioner, the command to stop the switching operation of the inverter circuit 60 is inputted to the MCU 83 when a stop button of a remote controller (not shown) is pressed.

If the command to stop the switching operation of the inverter circuit 60 is not inputted in step S101 (S101: No), the control unit 80 iterates the determination process in step S101 while continuing to drive the inverter circuit 60. On the other hand, if the command to stop the switching operation of the inverter circuit 60 is inputted in step S101 (S101: Yes), the control unit 80 advances the processing to step S102.

In step S102, the control unit 80 determines whether or not the induced voltage of the motor M1 is higher than the DC voltage of the smoothing capacitor 30. As described above, the induced voltage of the motor M1 is calculated as the product (ω·Ke) of the rotational speed ω of the motor M1 and the induced voltage constant Ke. The induced voltage constant Ke is a known value. The DC voltage of the smoothing capacitor 30 is detected by the DC voltage detection unit 40.

If the induced voltage of the motor M1 is higher than the DC voltage of the smoothing capacitor 30 in step S102 (S102: Yes), the control unit 80 advances the processing to step S103.

In step S103, the control unit 80 decelerates the motor M1 using the inverter control circuit 81. In this way, the control unit 80 (inverter control unit) performs "motor deceleration control" of decreasing the rotational speed of the motor M1 (S103) when the command to stop the switching operation of the inverter circuit 60 is inputted (S101: Yes) and the induced voltage of the motor M1 is higher than the DC voltage of the smoothing capacitor 30 (S102: Yes). Here, a rate of decrease in the rotational speed over time at which the inverter control circuit 81 decelerates the motor M1 is set in advance.

In step S104, the control unit 80 stops the switching operation of the inverter circuit 60 based on PWM control using the inverter control circuit 81. For a while even after the switching operation is stopped, the rotor of the motor M1 continues to rotate by inertia and the motor M1 functions as a power generator. However, the rotational speed of the motor M1 is made low by the motor deceleration control (S103).

Although not shown in FIG. 2, a level relationship between the induced voltage of the motor M1 and the DC voltage of the smoothing capacitor 30 may be used as a trigger for causing the control unit 80 to terminate the motor deceleration control (in other words, stop the switching operation of the inverter circuit 60). Specifically, the control unit 80 (inverter control unit) may continue the motor deceleration control until the induced voltage of the motor M1 becomes equal to or lower than the DC voltage of the smoothing capacitor 30 (induced voltage ≤ DC voltage). Since almost no regenerative current flows when the induced voltage of the motor M1 is equal to or lower than the DC voltage of the smoothing capacitor 30, a current flowing into the resistive element 41 upon subsequent switching of the overvoltage protection circuit 50 to the ON state can be made small.

Instead, for example, the control unit 80 may continue the motor deceleration control until the induced voltage of motor M1 drops to or below a predetermined value with the deceleration of the motor M1. The above predetermined value is an induced voltage threshold to serve as a criterion for determining whether or not to terminate the motor deceleration control, and is set in advance. Alternatively, for example, the control unit 80 may terminate the motor deceleration control when the duration of the motor deceleration control reaches a predetermined time.

Next, in step S105, the control unit 80 switches the overvoltage protection circuit 50 to the ON state using the overvoltage protection control circuit 82. Specifically, the control unit 80 (overvoltage protection control unit) performs "overvoltage protection control" of turning on the switching element 51 of the overvoltage protection circuit 50 based on the detected value of the DC voltage detection unit 40. With the overvoltage protection control thus performed, the regenerative current from the motor M1 and the current due to the energy in the reactor 20 and the like are caused to flow through the resistive element 52 and are consumed as thermal energy by the resistive element 52. This makes it possible to suppress the rise in the DC voltage of the smoothing capacitor 30.

Although not shown in FIG. 2, the overvoltage protection control circuit 82 may continue the overvoltage protection control until the DC voltage of the smoothing capacitor 30 becomes equal to or lower than a predetermined value. Alternatively, the overvoltage protection control circuit 82 may continue the overvoltage protection control for a predetermined time. This makes it possible to suppress the rise in the DC voltage of the smoothing capacitor 30.

If the induced voltage of the motor M1 is equal to or lower than the DC voltage of the smoothing capacitor 30 in step S102 (S102: No), the control unit 80 advances the processing to step S106.

In step S106, the control unit 80 stops the switching operation of the inverter circuit 60 using the inverter control circuit 81. In this case, because of the condition of induced voltage ≤ DC voltage (S102: No), almost no regenerative current flows. Therefore, it is not particularly necessary to switch the overvoltage protection circuit 50 to the ON state. After performing the process in step S105 or S106, the control unit 80 terminates the series of processing (END).

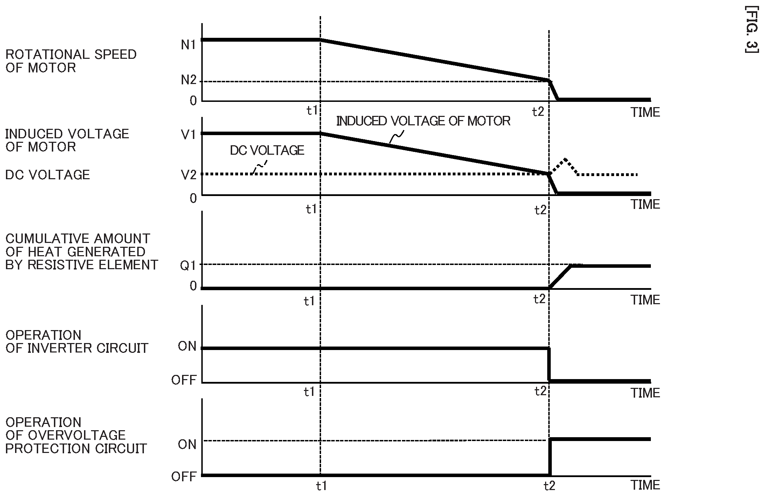

FIG. 3 includes time charts related to the motor deceleration control and the overvoltage protection control (see also FIG. 1 as needed).

In FIG. 3, the horizontal axis of each time chart represents a time. In FIG. 3, the vertical axes of the respective time charts, from top to bottom, represent the rotational speed of the motor M1, the induced voltage of the motor M1 and the DC voltage of the smoothing capacitor 30, a cumulative amount of heat generated by the resistive element 52 of the overvoltage protection circuit 50, an operation of the inverter circuit 60, and an operation of the overvoltage protection circuit 50. In addition, it is assumed that a command to stop the inverter circuit 60 is inputted to the control unit 80 at time t1 in FIG. 3 (S101 in FIG. 2: Yes).

In the example in FIG. 3, at time t1 at which the command to stop the inverter circuit 60 is inputted, a value V1 of the induced voltage of the motor is higher than a value V2 of the DC voltage of the smoothing capacitor 30 (S102 in FIG. 2: Yes). Accordingly, the control unit 80 starts the motor deceleration control from time t1 and decreases the rotational speed of the motor (S103). In the example in FIG. 3, at time t2 at which the rotational speed of the motor M1 is decreased from a value N1 to a value N2, the induced voltage of the motor M1 drops to the value V2 equal to the DC voltage of the smoothing capacitor 30.

Accordingly, at time t2, the control unit 80 terminates the motor deceleration control, stops the inverter circuit 60, and starts the overvoltage protection control (S104 and S105 in FIG. 2). That is, the control unit 80 switches the switching element 51 of the overvoltage protection circuit 50 to the ON state. In this way, in the example in FIG. 3, after the motor deceleration control is started (i.e., after time t1), the overvoltage protection control is started from time t2 at which the switching operation of the inverter circuit 60 is stopped. In other words, since the overvoltage protection control is started immediately after the timing of stopping the inverter circuit 60, the rise in the DC voltage of the smoothing capacitor 30 can be suppressed.

Note that, in FIG. 3, after the overvoltage protection control is started at time 2, the DC voltage of the smoothing capacitor 30 increases once and then decreases. This is because the current due to the energy stored in the three-phase windings of the motor M1 and the reactor 20 flows through the overvoltage protection circuit 50, but the cumulative amount of heat generated by the resistive element 52 is kept to a relatively small value Q1.

### <Comparative Example>

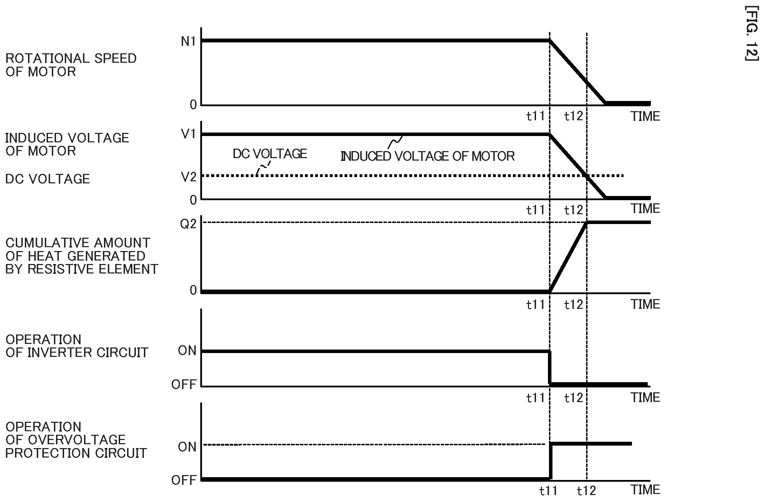

FIG. 12 includes timer charts related to a power conversion device according to a comparative example.

The configuration of the power conversion device in the comparative example is the same as that shown in FIG. 1, but is different from that of the first embodiment in that the motor deceleration control is not performed. In FIG. 12, the horizontal and vertical axes of the time charts are the same as those in FIG. 3, so their explanation is omitted here.

In the comparative example in FIG. 12, at time t11 at which the command to stop the inverter circuit 60 is inputted, the value V1 of the induced voltage of the motor is higher than the value V2 of the DC voltage of the smoothing capacitor 30. Also, since the deceleration control is not performed in the comparative example, at time t11, the operation of the inverter circuit 60 is switched to the OFF state and the operation of the overvoltage protection circuit 50 is switched to the ON state. Accordingly, the overvoltage protection control is started in the state where the value V1 of the induced voltage of the motor M1 is considerably higher than the value V2 of the DC voltage of the smoothing capacitor 30. As a result, an excessive current flows through the resistive element 52 of the overvoltage protection circuit 50, and the cumulative amount of heat generated by the resistive element 52 reaches a relatively large value Q2. Such processing may shorten the lifespan of the resistive element 52 and also thermally affect surrounding circuit components.

### <Effects>

In contrast to the above, in the first embodiment, as described above, in the case where "induced voltage > DC voltage" holds when the command to stop the inverter circuit 60 is inputted (S102 in FIG. 2: Yes), the control unit 80 first performs the motor deceleration control, then stops the inverter circuit 60, and performs the overvoltage protection control (S103 to S105). This makes it possible to prevent an excessive regenerative current from flowing into the resistive element 52 of the overvoltage protection circuit 50 and reduce the amount of heat generated in the resistive element 52. This also makes it possible to prevent the excessive current from flowing into the switching element 51 of the overvoltage protection circuit 50. Therefore, according to the first embodiment, it is possible to not only suppress the shortening of the lifespans of the switching element 51 and the resistive element 52, but to suppress the thermal impact on the circuit components surrounding the resistive element 52.

The magnitude of the regenerative current generated in the motor M1 depends on the induced voltage constant and inertia (moment of inertia) in the motor M1. In other words, the magnitude of the regenerative current takes a value that varies depending on the specifications of the motor M1. However, in the first embodiment, the regenerative current flowing through the overvoltage protection circuit 50 is considerably suppressed as described above. Therefore, when making a circuit design for the power conversion device 100, a designer does not have to select (tune), as the switching element 51 and the resistive element 52, elements with an abundant capacity relative to rated current depending on the specifications of each type of motor M1. In other words, even when motors M1 different in specifications are used in multiple types of devices, common elements may be used as the switching element 51 and the resistive element 52, thus simplifying the circuit design work for the power conversion device 100.

Moreover, even when a small-capacity film capacitor is used as the smoothing capacitor 30, it is possible to prevent the DC voltage of the smoothing capacitor 30 from becoming too high due to the regenerative current of the motor M1 and the like. This makes it possible to achieve cost reduction, downsizing, and lifespan extension of the smoothing capacitor 30, and also enhance the reliability of the power conversion device 100.

### <<Second Embodiment>>

A second embodiment is different from the first embodiment in that, after the inverter circuit 60 (see FIG. 1) is stopped, the overvoltage protection control is stated when the DC voltage of the smoothing capacitor 30 (see FIG. 1) reaches a predetermined value. The other matters (such as the configuration of the power conversion device 100: see FIG. 1) are the same as in the first embodiment. Therefore, differences from the first embodiment will be explained, and the repetitive description will be omitted.

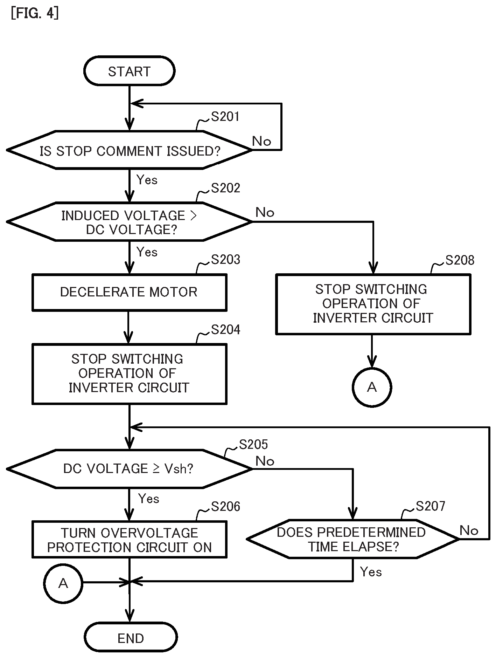

FIG. 4 is a flowchart showing processing of a control unit of a power conversion device according to the second embodiment (see also FIG. 1 as needed).

Here, since the processes in steps S201 to S204, S206, and S208 in FIG. 4 are the same in this order as in steps S101 to S104, S105, and S106 in FIG. 2 of the first embodiment, the detailed description thereof is omitted.

When a command to stop the inverter circuit 60 is issued (S201: Yes) and the induced voltage of the motor M1 is higher than the DC voltage of the smoothing capacitor 30 (S202: Yes), the control unit 80 first decelerates the motor M1 and then stops the switching operation of the inverter circuit 60 (S203 and S204).

Here, even when the switching operation of the inverter circuit 60 is stopped after the motor M1 is decelerated, the DC voltage of the smoothing capacitor 30 often rises temporarily due to the current due to the energy stored in the three-phase windings of the motor M1 and the reactor 20. Therefore, in the second embodiment, in step S205, the control unit 80 determines whether or not the DC voltage of the smoothing capacitor 30 is equal to or higher than a predetermined value Vsh. The aforementioned predetermined value Vsh is a voltage threshold to serve as a criterion for determining whether or not the control unit 80 will start the overvoltage protection control (S206) and is set in advance.

If the DC voltage of the smoothing capacitor 30 is equal to or higher than the predetermined value Vsh in step S205 (S205: Yes), the control unit 80 advances the processing to step S206.

In step S206, the control unit 80 switches the overvoltage protection circuit 50 to the ON state using the overvoltage protection control circuit 82. Specifically, after the switching operation of the inverter circuit 60 is stopped, the control unit 80 (overvoltage protection control unit) starts the overvoltage protection control (S206) when the DC voltage of the smoothing capacitor 30 becomes equal to or higher than the predetermined value Vsh (S205: Yes). As a result, the regenerative current of the motor M1 and the current due to the energy in the reactor 20 and so on flow into the resistive element 52 and are consumed as thermal energy by the resistive element 52, which makes it possible to suppress the rise in the DC voltage of the smoothing capacitor 30.

On the other hand, if the DC voltage of the smoothing capacitor 30 is lower than the predetermined value Vsh in step S205 (S205: No), the control unit 80 advances the processing to step S207.

In step S207, the control unit 80 determines whether or not a predetermined time elapses after the switching operation of the inverter circuit 60 is stopped. This predetermined time is a threshold to serve as a criterion for determining whether or not the control unit 80 will terminate the series of processing without performing the overvoltage protection control (S206), and is set in advance.

If the predetermined time does not elapse after the switching operation of the inverter circuit 60 is stopped in step S207 (S207: No), the control unit 80 returns the processing to step S205. On the other hand, if the predetermined time elapses after the switching operation of the inverter circuit 60 is stopped in step S207 (S207: Yes), the control unit 80 terminates the series of processing without performing the overvoltage protection control (S206) (END).

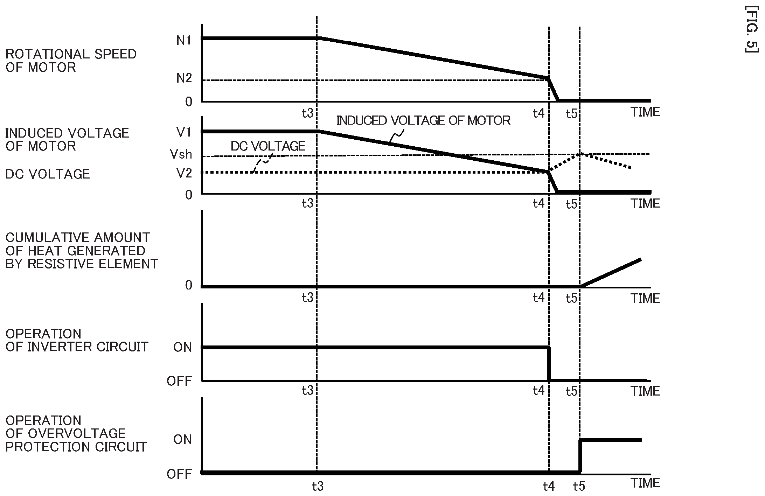

FIG. 5 includes time charts related to the motor deceleration control and the overvoltage protection control (see also FIG. 1 as appropriate).

In FIG. 5, the horizontal and vertical axes of each time chart are the same as those in FIG. 3, and therefore their description is omitted. In the example in FIG. 5, at time t4 at which the induced voltage of the motor M1 drops to the value V2 equal to the DC voltage of the smoothing capacitor 30 as a result of the motor deceleration control (S203 in FIG. 4), the operation of the inverter circuit 60 is switched to the OFF state (S204).

With the stoppage of the inverter circuit 60, the current due to the energy stored in the three-phase windings of the motor M1 and the reactor 20 flows into the smoothing capacitor 30, causing the DC voltage of the smoothing capacitor 30 to temporarily rise from time t4 and reach the predetermined value Vsh at time t5 (S205: Yes in FIG. 4). In this case, the control unit 80 switches the switching element 51 of the overvoltage protection circuit 50 to the ON state (S206).

In this way, the overvoltage protection control is started at time t5, which is after the motor deceleration control is started (after time t3 in FIG. 5) and after the switching operation of the inverter circuit 60 is stopped (after time t4 in FIG. 5). As a result, the current flows into the overvoltage protection circuit 50, which makes it possible to suppress the rise in the DC voltage of the smoothing capacitor 30.

### <Effects>

According to the second embodiment, even after the switching operation of the inverter circuit 60 is stopped, the overvoltage protection control is not performed if the DC voltage of the smoothing capacitor 30 does not reach the predetermined value Vsh. This reduces the operating frequency of the overvoltage protection circuit 50, resulting in reduced electrical and thermal loads imposed on the resistive element 52, as compared to the first embodiment. As a result, it is possible to extend the lifespan of resistive element 52.

### <<Third Embodiment>>

A third embodiment is different from the first embodiment in that the overvoltage protection control is started before the switching operation of the inverter circuit 60 (see FIG. 1) is stopped. The other matters (such as the configuration of the power conversion device 100: see FIG. 1) are the same as in the first embodiment. Therefore, differences from the first embodiment will be explained, and the repetitive description will be omitted.

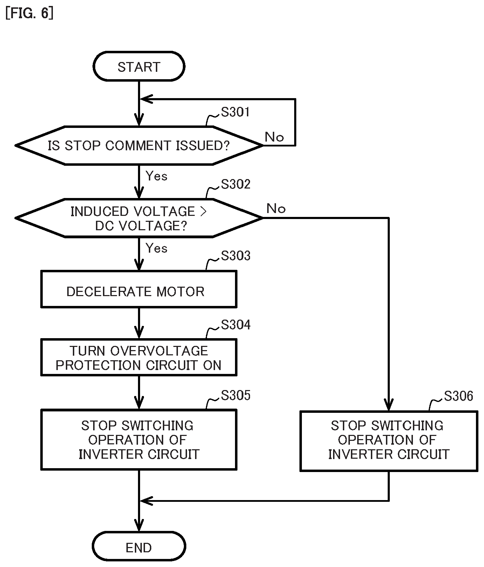

FIG. 6 is a flowchart showing processing of a control unit of a power conversion device according to the third embodiment (see also FIG. 1 as needed).

Here, since the processes in steps S301 to S303, S305, and S306 in FIG. 6 are the same in this order as in steps S101 to S103, S105, and S106 in FIG. 2 of the first embodiment, the detailed description thereof is omitted.

When a command to stop the inverter circuit 60 is issued (S301: Yes) and the induced voltage of the motor M1 is higher than the DC voltage of the smoothing capacitor 30 (S302: Yes), the control unit 80 decelerates the motor M1 (S303).

Next, in step S304, the control unit 80 switches the overvoltage protection circuit 50 to the ON state using the overvoltage protection control circuit 82. As a result, the regenerative current of the motor M1 and the current due to the energy of the reactor 20 and so on flow into the resistive element 52 and are consumed as thermal energy by the resistive element 52, which makes it possible to suppress the rise in the DC voltage of the smoothing capacitor 30.

In this way, in the third embodiment, before the switching operation of the inverter circuit 60 is stopped (S305), the control unit 80 switches the overvoltage protection circuit 50 to the ON state (S304). Thus, the start timing of the overvoltage protection control can be prevented from delaying due to a delay in processing in the inverter control circuit 81 even if the delay occurs.

Although not shown in FIG. 6, the following conditions may be used as triggers for starting the overvoltage protection control (S304). Specifically, the overvoltage protection control (S304) may be started when the induced voltage of the motor M1 drops to a predetermined value (a value higher than the DC voltage of the smoothing capacitor 30). Alternatively, the overvoltage protection control (S304) may be started when the duration of the motor deceleration control (S303) reaches a predetermined value.

Next, in step S305, the control unit 80 stops the switching operation of the inverter circuit 60 using the inverter control circuit 81. Although not shown in FIG. 6, the motor deceleration control (S303) is also terminated at the same time that the switching operation of the inverter circuit 60 is stopped (S305).

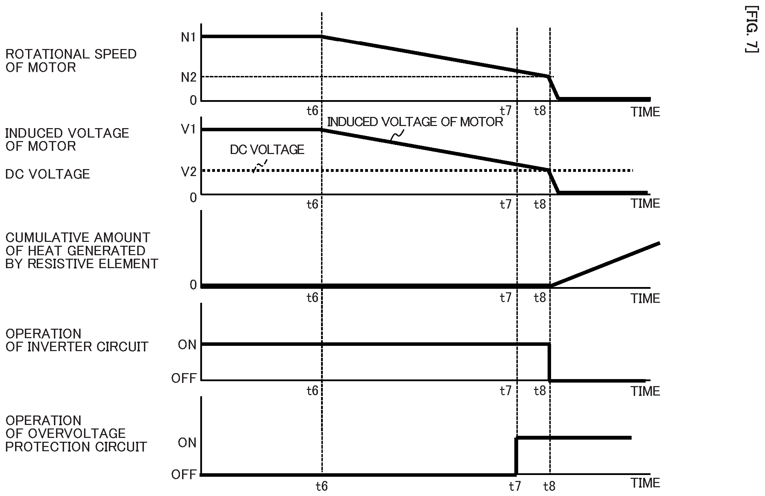

FIG. 7 includes time charts related to the motor deceleration control and the overvoltage protection control.

In FIG. 7, the horizontal and vertical axes of each time chart are the same as those in FIG. 3, and therefore their description is omitted. In the example in FIG. 7, at time t8 at which the induced voltage of the motor M1 drops to the value V2 equal to the DC voltage of the smoothing capacitor 30 as a result of performing the motor deceleration control (S303 in FIG. 6), the operation of the inverter circuit 60 is switched to the OFF state (S305).

Meanwhile, the operation of the overvoltage protection circuit 50 is started (S304) at time t7, which is before the timing (time t8) at which the inverter circuit 60 is switched to the OFF state. In other words, the overvoltage protection control is started at time t7, which is after the motor deceleration control is started (after time t6 in FIG. 7) and before the switching operation of the inverter circuit 60 is stopped (before time t8 in FIG. 7). Thus, even when a delay occurs in the processing by the inverter control circuit 81 and the DC voltage of the smoothing capacitor 30 rises sharply, the timing of switching the overvoltage protection circuit 50 to the ON state can be prevented from delaying. Therefore, the rise in the DC voltage of the smoothing capacitor 30 can be reliably suppressed.

### <Effects>

According to the third embodiment, since the overvoltage protection control is started before the switching operation of the inverter circuit 60 is stopped, it is possible to prevent the start of the overvoltage protection control from being delayed due to a delay in the processing by the inverter control circuit 81. Therefore, the rise in the DC voltage of the smoothing capacitor 30 can be reliably suppressed.

### <<Fourth Embodiment>>

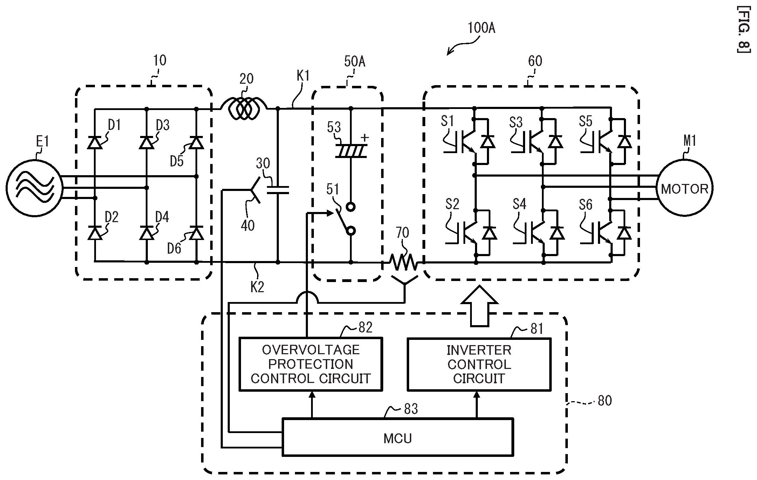

A fourth embodiment is different from the first embodiment in a configuration of an overvoltage protection circuit 50A (see FIG. 8), but the other configuration and processing details are the same as in the first embodiment. Therefore, the difference from the first embodiment will be explained, and the repetitive description will be omitted.

FIG. 8 is a configuration diagram of a power conversion device 100A according to the fourth embodiment.

As shown in FIG. 8, the overvoltage protection circuit 50A of the power conversion device 100A has a series connection of a switching element 51 and a capacitor 53. The capacitor 53 is an element that stores charge while the switching element 51 is in the ON state. For example, an electrolytic capacitor may be used as such a capacitor 53. The capacitance of the capacitor 53 may be made larger than the capacitance of the smoothing capacitor 30. This makes it easier for the regenerative current of the motor M1 and the like to flow into the capacitor 53 of the overvoltage protection circuit 50A than into the smoothing capacitor 30.

As shown in FIG. 8, the series connection of the switching element 51 and the capacitor 53 has one terminal connected to a positive DC line K1 and the other terminal connected to a negative DC line K2. More specifically, the positive terminal of the capacitor 53 is connected to the positive DC line K1, and the negative terminal of the capacitor 53 is connected to the negative DC line K2 via the switching element 51.

For example, in the case where the switching element 51 is switched to the ON state as a result of performing the overvoltage protection control after the motor M1 is decelerated, the regenerative current and the like flow into the smoothing capacitor 30 and the capacitor 53 in a ratio corresponding to the ratio of their capacitances. Therefore, appropriate adjustment of the capacitance of the capacitor 53 during the design phase makes it possible to inhibit an overvoltage from being applied to the smoothing capacitor 30.

### <Effects>

According to the fourth embodiment, the configuration in which the overvoltage protection circuit 50A includes the series connection of the capacitor 53 and the switching element 51 makes it possible to inhibit an overvoltage from being applied to the smoothing capacitor 30. Moreover, since the overvoltage protection circuit 50A does not particularly need to be equipped with a high-resistance resistive element in order to consume the regenerative current from the motor M1, the procurement of electronic components is easier than in the first embodiment.

### <<Fifth Embodiment>>

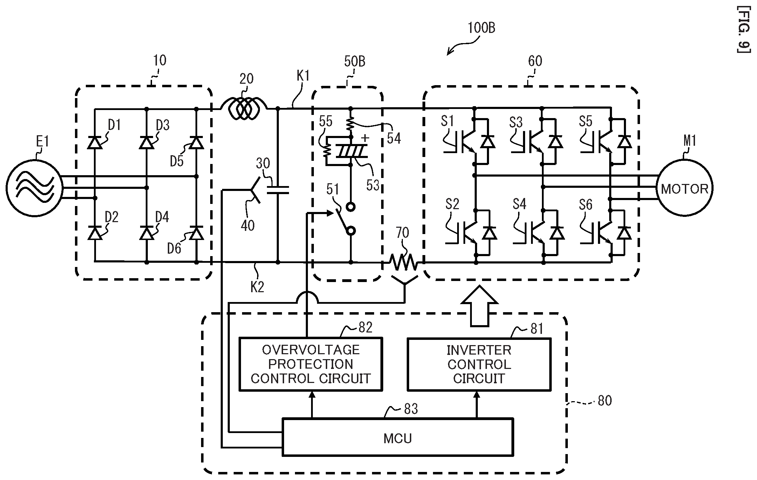

A fifth embodiment is different from the fourth embodiment in a configuration of an overvoltage protection circuit 50B (see FIG. 9), but the other configuration and processing details are the same as in the fourth embodiment. Therefore, the difference from the fourth embodiment will be explained, and the repetitive description will be omitted.

FIG. 9 is a configuration diagram of a power conversion device 100B according to the fifth embodiment.

As shown in FIG. 9, the overvoltage protection circuit 50B of the power conversion device 100B includes a switching element 51, a capacitor 53, a first resistive element 54, and a second resistive element 55. The capacitor 53 is an element that stores charge while the switching element 51 is in the ON state. In the example in FIG. 9, a positive terminal of the capacitor 53 is connected to a positive DC line K1, and a negative terminal of the capacitor 53 is connected to a negative DC line K2 via the switching element 51.

The first resistive element 54 is an element for adjusting the magnitude of the current flowing into the capacitor 53 when the switching element 51 is switched to the ON state, and is connected in series to one side (positive terminal) of the capacitor 53. The second resistive element 55 is an element for consuming the charge stored in the capacitor 53 (converting it into thermal energy), and is connected in parallel to the capacitor 53. The switching element 51 is an element for switching whether or not to allow the current to flow through the first resistive element 54, and is connected in series to the other side (negative terminal) of the capacitor 53.

As shown in FIG. 9, the series connection of the first resistive element 54, the capacitor 53, and the switching element 51 has one terminal connected to the positive DC line K1 and the other terminal connected to the negative DC line K2.

### <Effects>

According to the fifth embodiment, the magnitude of the current flowing into the capacitor 53 when the switching element 51 is switched to the ON state can be adjusted by the first resistive element 54. In other words, appropriate adjustment of the resistance value of the first resistive element 54 in the circuit design phase makes it possible to inhibit an excessive current from flowing into the capacitor 53. Moreover, the charge stored in the capacitor 53 can be consumed by the second resistive element 55.

### <<Sixth Embodiment>>

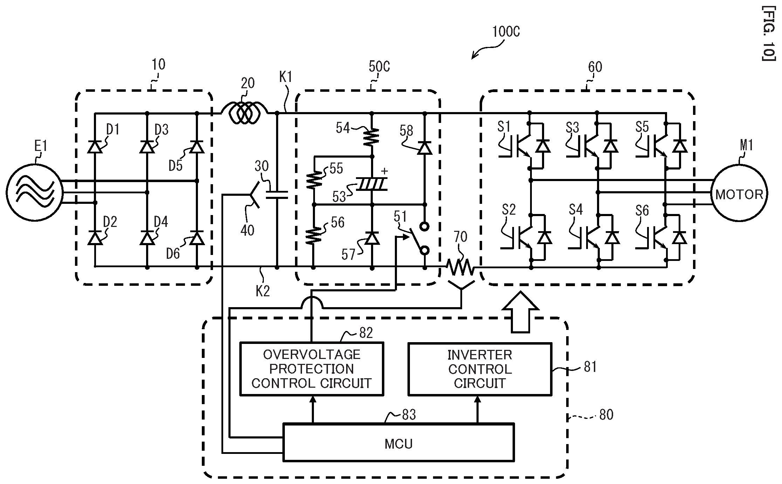

A sixth embodiment is different from the fifth embodiment (see FIG. 9) in a configuration of an overvoltage protection circuit 50C (see FIG. 10), but the other configuration and processing details are the same as in the fifth embodiment. Therefore, the difference from the fifth embodiment will be explained, and the repetitive description will be omitted.

FIG. 10 is a configuration diagram of a power conversion device 100C according to the sixth embodiment.

As shown in FIG. 10, the overvoltage protection circuit 50C of the power conversion device 100C includes a capacitor 53, a switching element 51, a first resistive element 54, and a second resistive element 55, and additionally includes a third resistive element 56 and diodes 57 and 58. The connection relationship among the capacitor 53, the first resistive element 54, and the second resistive element 55 is the same as in the fifth embodiment (see FIG. 9), so its description is omitted.

The third resistive element 56 shown in FIG. 10 is a high-impedance resistor for stabilizing a voltage applied to the switching element 51. The third resistive element 56 has one terminal connected to a negative terminal of the capacitor 53, and the other terminal connected to a negative DC line K2. The diodes 57 and 58 are elements for forming a path through which a current flows when a reverse voltage is applied to the switching element 51.

The diode 57 and the third resistive element 56 are both connected in parallel to the switching element 51. The diode 57 has an anode connected to the negative DC line K2, and a cathode connected to the negative terminal of the capacitor 53. The other diode 58 has an anode connected to the negative DC line K2 via the switching element 51, and a cathode connected to the positive DC line K1.

### <Effects>

According to the sixth embodiment, the third resistive element 56 thus provided makes it possible to stabilize the voltage of the switching element 51. In addition, the diodes 57 and 58 thus provided make it possible to form the path through which the current flows when the reverse voltage is applied to the switching element 51.

### <<Seventh Embodiment>>

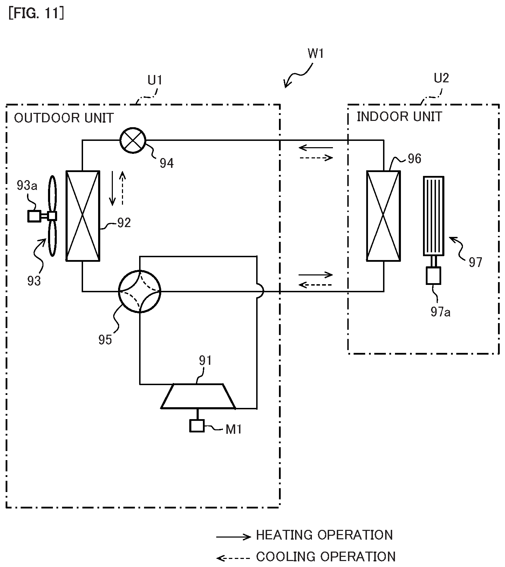

In a seventh embodiment, description will be given of an air conditioner W1 (see FIG. 11) equipped with the power conversion device 100 (see FIG. 1) having the configuration described in the first embodiment. The configuration and processing details of the power conversion device 100 are the same as in the first embodiment, so their description will be omitted.

FIG. 11 is a configuration diagram of the air conditioner W1 according to the seventh embodiment.

In FIG. 11, solid arrows indicate a flow of a refrigerant in a heating cycle.

Meanwhile, in FIG. 11, dashed arrows indicate a flow of the refrigerant in a cooling cycle.

The air conditioner W1 is an apparatus that performs air conditioning, such as a cooling operation and a heating operation. As shown in FIG. 11, the air conditioner W1 includes, as constituents provided in an outdoor unit U1, a compressor 91, an outdoor heat exchanger 92, an outdoor fan 93, an expansion valve 94, and a four-way valve 95. In addition, the air conditioner W1 includes, as constituents provided in an indoor unit U2, an indoor heat exchanger 96 and an indoor fan 97.

Although not shown in FIG. 11, the air conditioner W1 includes the power conversion device 100 (see FIG. 1) having the same configuration as in the first embodiment. This power conversion device 100 is mounted on a circuit board (not shown) of the outdoor unit U1.

The compressor 91 is a device that compresses a low-temperature, low-pressure gaseous refrigerant and discharges the resultant high-temperature, high-pressure gaseous refrigerant. Although not shown in FIG. 11, an accumulator for separating the refrigerant into gas and liquid is connected to a suction side of the compressor 91. The motor M1, which serves as a driving source for the compressor 91, is connected to the output side of the inverter circuit 60 (see FIG. 1) of the power conversion device 100 (see FIG. 1).

The outdoor heat exchanger 92 is a heat exchanger that performs heat exchange between the refrigerant flowing through its heat transfer tube and outside air fed by the outdoor fan 93. The outdoor fan 93 is a fan that feeds the outside air to the outdoor heat exchanger 92. The outdoor fan 93 has an outdoor fan motor 93a as its driving source and is installed near the outdoor heat exchanger 92.

The expansion valve 94 is a valve that reduces the pressure of the refrigerant condensed in a "condenser" (one of the outdoor heat exchanger 92 and the indoor heat exchanger 96). The refrigerant reduced in pressure by the expansion valve 94 is then led to an "evaporator" (the other one of the outdoor heat exchanger 92 and the indoor heat exchanger 96).

The indoor heat exchanger 96 is a heat exchanger that performs heat exchange between the refrigerant flowing through its heat transfer tube (not shown) and indoor air fed by the indoor fan 97 (air from an air-conditioned room). The indoor fan 97 is a fan that feeds the indoor air to the indoor heat exchanger 96. The indoor fan 97 has an indoor fan motor 97a as its driving source and is installed near the indoor heat exchanger 96.

The four-way valve 95 is a valve that switches a flow path of the refrigerant according to an operation mode of the air conditioner W1. For example, in a cooling operation (see the dashed arrows in FIG. 11), the refrigerant circulates through the compressor 91, the outdoor heat exchanger 92 (condenser), the expansion valve 94, and the indoor heat exchanger 96 (evaporator) in this order. Meanwhile, in a heating operation (see the solid arrows in FIG. 11), the refrigerant circulates through the compressor 91, the indoor heat exchanger 96 (condenser), the expansion valve 94, and the outdoor heat exchanger 92 (evaporator) in this order. Then, the air after the heat exchange with the refrigerant flowing through the indoor heat exchanger 96 is blown out from the indoor unit U2 into the air-conditioned room.

### <Effects>

According to the seventh embodiment, the air conditioner W1 is equipped with the power conversion device 100 (see FIG. 1) having the same configuration as in the first embodiment, which makes it possible to enhance the reliability of the air conditioner W1.

### <<Modifications>>

Although the power conversion devices 100, 100A, 100B, and 100C and the air conditioner W1 according to the present disclosure are described above in detail in the respective embodiments, the present disclosure should not be limited to the description of these and may be modified in various ways.

For example, the embodiments describe the case where the overvoltage protection control circuit 82 (see FIG. 1) is composed of an analog electronic circuit including a comparator or a software-based digital electronic circuit, but the present disclosure is not limited to this case. Specifically, the overvoltage protection control circuit 82 may be composed of a combination of a predetermined analog electronic circuit and digital electronic circuit.

In addition, in the first embodiment, when the induced voltage of the motor M1 is equal to or lower than the DC voltage of the smoothing capacitor 30 in step S102 of FIG. 2 (S102: No), the control unit 80 may first stop the switching operation of the inverter circuit 60 (S106) and then perform the overvoltage protection control. This allows the resistive element 41 to consume the current due to the energy stored in the three-phase windings of the motor M1 and the reactor 20, thereby making it possible to suppress the rise in the DC voltage of the smoothing capacitor 30. The same may also apply to the second embodiment (see FIG. 4) and the third embodiment (see FIG. 6).

Moreover, the embodiments describe the case where the AC power supply E1 (see FIG. 1) is a three-phase AC power supply, but the present disclosure is not limited to this case and a single-phase AC power supply may be also used.

Furthermore, the embodiments describe the case where there is one smoothing capacitor 30 (see FIG. 1), but the present disclosure is not limited to this case. Specifically, the smoothing capacitor may be formed by multiple capacitors connected in series, in parallel, or in series-parallel. In this case, the "DC voltage of the smoothing capacitor" is defined, by considering the above multiple capacitors as a single smoothing capacitor with their capacitances combined together, as a voltage across the single smoothing capacitor (the DC voltage between the DC lines K1 and K2). Also, the same may apply to the second to seventh embodiments.

The above embodiments may be combined as appropriate. For example, any of the first to third embodiments may be combined with the fourth embodiment (see FIG. 8) and the overvoltage protection circuit 50A with the configuration shown in FIG. 8 may be used. Similarly, the first to third embodiments may use the overvoltage protection circuit 50B (the fifth embodiment) in FIG. 9 or the overvoltage protection circuit 50C (the sixth embodiment) in FIG. 10.

Moreover, any of the first to sixth embodiments may be combined with the seventh embodiment (see Fig. 11), and the motor M1 connected to the inverter circuit 60 may be used as a driving source for the compressor 91 of the air conditioner W1.

Furthermore, the seventh embodiment (see FIG. 11) describes the configuration in which the power conversion device 100 (see FIG. 1) is connected to the motor M1 of the compressor 91, but the present disclosure is not limited to this. For example, the power conversion device 100 may be connected to the outdoor fan motor 93a (see FIG. 11). Alternatively, the power conversion devices 100 may be connected to the motor M1 of the compressor 91 and the outdoor fan motor 93a, respectively.

Furthermore, the seventh embodiment (see FIG. 11) describes the configuration in which the air conditioner W1 includes the four-way valve 95, but the present disclosure is not limited to this. Specifically, the four-way valve 85 may be omitted as appropriate and the air conditioner may be configured for cooling only or heating only.

The seventh embodiment (see FIG. 11) may be applied to various types of air conditioners, including not only room air conditioners but also commercial air conditioners and multi-split air conditioners for buildings. Moreover, the seventh embodiment may be applied to other instruments such as water heaters, refrigerators, and air conditioning and hot water supply systems.

The embodiments are described in detail for the purpose of clearly explaining the present disclosure and the present disclosure is not necessarily limited to those having all the aforementioned constituents. Some of the constituents in each embodiment may be altered by deletion or addition/replacement with other constituents.

In addition, the mechanisms and configurations described above are those deemed necessary for the explanatory purposes and do not necessarily represent all of the mechanisms and configurations in actual products.

### Reference Signs List

10 converter circuit
20 reactor
30 smoothing capacitor
40 DC voltage detection unit
50, 50A, 50B, 50C overvoltage protection circuit
51 switching element
52 resistive element
53 capacitor
54 first resistive element
55 second resistive element
56 third resistive element
57, 58 diode
60 inverter circuit
70 shunt resistor
80 control unit
81 inverter control circuit (inverter control unit)
82 overvoltage protection control circuit (overvoltage protection control unit)
83 MCU (inverter control unit and overvoltage protection control unit)
91 compressor
92 outdoor heat exchanger
93 outdoor fan
94 expansion valve
95 four-way valve
96 indoor heat exchanger
97 indoor fan
100, 100A, 100B, 100C power conversion device
E1 AC line
K1, K2 DC line
M1 motor
S103, S203, S303 step (motor deceleration control)
S105, S206, S304 step (overvoltage protection control)
W1 Air conditioner

## Claims

1. A power conversion device comprising:
a converter circuit configured to convert an AC voltage applied from an AC power supply into a DC voltage;
a smoothing capacitor connected to a pair of DC lines on an output side of the converter circuit and configured to smooth the DC voltage on the output side of the converter circuit;
an inverter circuit configured to convert the DC voltage of the smoothing capacitor into an AC voltage and apply the AC voltage to a motor;
an inverter control unit configured to control the inverter circuit;
an overvoltage protection circuit having a switching element and connected to the pair of DC lines; and
an overvoltage protection control unit configured to control the overvoltage protection circuit, wherein
when a command to stop a switching operation of the inverter circuit is issued and an induced voltage of the motor is higher than the DC voltage of the smoothing capacitor, the inverter control unit preforms motor deceleration control of decreasing a rotational speed of the motor, and
after the motor deceleration control is started, the overvoltage protection control unit starts overvoltage protection control of turning on the switching element of the overvoltage protection circuit before, when, or after the switching operation of the inverter circuit is stopped.

2. The power conversion device according to claim 1, wherein the inverter control unit continues the motor deceleration control until the induced voltage of the motor becomes equal to or lower than the DC voltage of the smoothing capacitor.

3. The power conversion device according to claim 1, wherein the overvoltage protection control unit continues the overvoltage protection control until the DC voltage of the smoothing capacitor becomes equal to or lower than a predetermined value.

4. The power conversion device according to claim 1, wherein the overvoltage protection control unit continues the overvoltage protection control for a predetermined time.

5. The power conversion device according to claim 1, wherein the overvoltage protection control unit starts the overvoltage protection control when the DC voltage of the smoothing capacitor becomes equal to or higher than a predetermined value after the switching operation of the inverter circuit is stopped.

6. The power conversion device according to claim 1, wherein
the overvoltage protection circuit has a series connection of the switching element and a resistive element, and
the series connection has one terminal connected to a positive one of the DC lines and the other terminal connected to a negative one of the DC lines.

7. The power conversion device according to claim 1, wherein
the overvoltage protection circuit has a series connection of the switching element and a capacitor, and
the series connection has one terminal connected to a positive one of the DC lines and the other terminal connected to a negative one of the DC lines.

8. The power conversion device according to claim 1, wherein
the overvoltage protection circuit has a capacitor, a first resistive element connected in series to one side of the capacitor, a second resistive element connected in parallel to the capacitor, and the switching element connected in series to the other side of the capacitor, and
a series connection of the first resistive element, the capacitor, and the switching element has one terminal connected to a positive one of the DC lines and the other terminal connected to a negative one of the DC lines.

9. An air conditioner comprising:
the power conversion device according to any one of claims 1 to 8;
a compressor;
an outdoor heat exchanger;
an expansion valve; and
an indoor heat exchanger, wherein
the motor to serve as a driving source for the compressor is connected to an output side of the inverter circuit.
